# EUROPÄISCHE PATENTSCHRIFT

(11) **EP 2 266 822 B1**
(45) Veröffentlichungstag und Bekanntmachung des Hinweises auf die Patenterteilung: **25.01.2012**
(21) Anmeldenummer: 10164725.3
(22) Anmeldetag: 02.06.2010
(51) Int. Cl.: B60H 1/00

(54) **Klimaanlage für ein Kraftfahrzeug, sowie Verfahren zum Betreiben derselben**
Air conditioner for a motor vehicle and method for operating same
Installation de climatisation pour un véhicule automobile et son procédé de fonctionnement

(30) Priorität: 22.06.2009 DE 102009027065
(43) Veröffentlichungstag der Anmeldung: 29.12.2010
(73) Patentinhaber: Ford Global Technologies, LLC, Dearborn, MI 48126 (US)
(72) Erfinder: Fischer, Dietmar, 50733, Köln (DE); Markowitz, Markus, 50668, Köln (DE)
(74) Vertreter: Drömer, Hans-Carsten

(56) Entgegenhaltungen:
- DE-A1-102007 001 452
- DE-A1-102008 019 465

## Beschreibung

Die vorliegende Erfindung betrifft eine Klimaanlage für ein Kraftfahrzeug, sowie ein Verfahren zum Betreiben derselben.

Bei in Kraftfahrzeugen eingesetzten Klimaanlagen (A/C-Systemen) ist in regelmäßigen Serviceintervallen die Nachfüllung von Kühlmittel erforderlich, um die Funktionsfähigkeit und Leistungsfähigkeit der Systeme aufrechtzuerhalten. Des Weiteren sind Nachfüllmaßnahmen auch nach einer Durchführung von Reparaturen im Kühlmittelkreislauf oder nach einem Verlust von Kühlmittel, wie dieser etwa aufgrund eines Lecks im Kühlmittelkreislauf auftreten kann, erforderlich.

In der Praxis können Probleme auftreten, wenn auf Kundenseite eine Nachfüllung der Klimaanlage mit Kühlmitteln erfolgt, welche nicht ausdrücklich vom Fahrzeughersteller empfohlen bzw. freigegeben wurden. So werden gegenwärtig gebräuchliche Klimaanlagen, welche für einen Betrieb mit dem unter der Bezeichnung R134a verbreiteten Fluorkohlenwasserstoff 1,1,1,2-Tetrafluorethan entwickelt und optimiert worden sind, beispielsweise zum Zwecke einer Verbesserung der Kühlfähigkeit mit Propan befüllt.

Derartige Nachfüllvorgänge mit ungeeigneten Substanzen haben Funktions- und Sicherheitsrisiken für die Klimaanlage, das Fahrzeug und den Kunden zur Folge. Des Weiteren kann auch die Lebensdauer der Klimaanlage gemindert werden. Außerdem können Beeinträchtigungen der Umwelt die Folge sein, wenn Gase oder Flüssigkeiten als Kühlmittel verwendet werden, welche als gefährlich eingestuft sind oder einen signifikanten Beitrag zum Treibhauseffekt liefern.

Aus der DE 10 2007 034 821 A1 sind eine Klimaanlage für ein Kraftfahrzeug sowie ein Verfahren zu deren Betrieb bekannt, bei welchen ein Steuergerät mit wenigstens einer Kühlmittelkreislaufkomponente verbunden ist, welches für eine Anpassung einer Betriebscharakteristik der Komponente an wenigstens zwei unterschiedliche Kühlmittel eingerichtet ist. Dabei kann das Steuergerät insbesondere so ausgelegt sein, dass es anhand der während des Betriebs der Klimaanlage im Kühlmittelkreislauf auftretenden Temperaturen und Druckwerte eine eigenständige Erkennung des Kühlmittels vornimmt und anschließend die für das entsprechende Kühlmittel vorgesehenen Kennwerte für den Betrieb der Klimaanlage einsetzt.

Aus der US 5 158 747 ist eine Vorrichtung zur Identifizierung und Unterscheidung unterschiedlicher Kältemittel bekannt, wobei das zu überprüfende Kältemittel in Dampfform in einen Probebehälter mit festgelegtem inneren Volumen eingeleitet wird, woraufhin der Dampfdruck des Kältemittels innerhalb des Behälters gemessen wird und wobei die Zufuhr von Kältemittel in den Behälter beendet wird, wenn der Dampfdruck des Kältemittels einen vorbestimmten Pegel erreicht. Ein Sensor sowie zugeordnete Elektronik sind an den Probebehälter angeschlossen, um die Art des Kältemittels in dem Behälter als Funktion einer oder mehrerer ausgewählter Eigenschaften des Kältemittels zu bestimmen und um der Bedienungsperson den Kältemitteltyp anzuzeigen.

Des Weiteren ist aus der US 6 360 551 B1 eine tragbare Test- und Diagnosevorrichtung für eine Fahrzeugklimaanlage bekannt.

Eine weitere gattungsmäße klimaanlage ist aus dem nächstliegenden Stand der Teknik, Dokument DE 10 2007 001452, bekannt.

Eine Aufgabe der vorliegenden Erfindung besteht darin, eine Klimaanlage für ein Kraftfahrzeug sowie ein Verfahren zum Betreiben derselben bereitzustellen, durch welche die vorstehend beschriebenen Funktions- und Sicherheitsrisiken vermindert werden können.

Diese Aufgabe wird durch eine Klimaanlage gemäß den Merkmalen des unabhängigen Patentanspruchs 1 sowie ein Verfahren gemäß Patentanspruch 5 gelöst.

Eine Klimaanlage für ein Kraftfahrzeug, welche einen Kühlmittelkreislauf und eine Einrichtung zur Ermittlung wenigstens einer für den Typ eines im Kühlmittelkreislauf vorhandenen Kühlmittels charakteristischen Größe aufweist, ist dahingehend ausgebildet, basierend auf einem Vergleich der wenigstens einen charakteristischen Größe mit gespeicherten Daten eine Diagnostik hinsichtlich des Vorhandenseins eines für die Klimaanlage nicht zugelassenen oder potentiell schädlichen Kühlmittels vorzunehmen, wobei in Abhängigkeit von dieser Diagnostik ein Warnsignal für den Fahrer erzeugbar und/oder eine automatische Unterbrechung des Betriebs der Klimaanlage herbeiführbar ist.

Der Erfindung liegt insbesondere das Konzept zugrunde, eine Diagnostik hinsichtlich potentiell schädlicher Kühlmittel durchzuführen, so dass erforderlichenfalls rechtzeitig ein Warnsignal für den Fahrer des Fahrzeuges erzeugt und/oder ein Betrieb der Klimaanlage unterbrochen werden kann. Dabei wird gemäß der Erfindung die Klimaanlage selbst bereits so ausgerüstet bzw. gesteuert, dass die Gefahr eines Betriebs mit ungeeigneten und/oder schädlichen Kühlmitteln wesentlich reduziert wird, indem eine Diagnostik hinsichtlich potentiell schädlicher Kühlmittel innerhalb der eigentlichen Klimaanlage durchführbar ist.

Dadurch, dass die Diagnostik und gegebenenfalls die Ausgabe eines Warnsignals an den Fahrer und/oder die automatische Unterbrechung des Betriebs der Klimaanlage basierend auf einem Vergleich der wenigstens einen charakteristischen Größe mit gespeicherten Daten erfolgt, ist erforderlichenfalls im Betrieb eine schnelle Warnung des Fahrers und/oder eine automatische Abschaltung der Klimaanlage im Falle der Identifizierung eines schädlichen Kühlmittels realisierbar. Die gespeicherten Daten können insbesondere eine Sammlung von Werten der charakteristischen Größen bzw. Kennlinien (z.B. Dampfdruckkurven) typischer bzw. gebräuchlicher Kühlmittel umfassen, welche entweder vom Hersteller empfohlen bzw. zugelassen oder gerade nicht empfohlen oder zugelassen sind (beispielsweise die Kennlinie des eingangs erwähnten, zwecks Verbesserung der Kühlfähigkeit zuweilen eingesetzten Propans).

Gemäß einer Ausführungsform weist die Einrichtung zur Ermittlung wenigstens einer für den Typ des im Kühlmittelkreislauf vorhandenen Kühlmittels charakteristischen Größe wenigstens einen Sensor zur Ermittlung des Dampfdrucks des Kühlmittels innerhalb des Kühlmittelkreislaufs auf.

Gemäß einer Ausführungsform ist die Einrichtung zur Ermittlung wenigstens einer für den Typ des im Kühlmittelkreislauf vorhandenen Kühlmittels charakteristischen Größe dazu ausgelegt, eine die Identifizierung des in dem Kühlmittelkreislauf vorhandenen Kühlmittels ermöglichende Kennlinie zu messen.

Gemäß einer Ausführungsform ist diese Kennlinie die Dampfdruckkurve des Kühlmittels, welche für unterschiedliche Temperaturen jeweils den Druck angibt, bei dem sich das Flüssigkeits-Gas-Gleichgewicht einstellt.

Die Erfindung betrifft ferner ein Verfahren zum Betreiben einer Klimaanlage, insbesondere einer Klimaanlage mit den vorstehenden Merkmalen, wobei wenigstens eine für den Typ eines im Kühlmittelkreislauf vorhandenen Kühlmittels charakteristische Größe ermittelt wird, und wobei basierend auf einem Vergleich der wenigstens einen charakteristischen Größe mit gespeicherten Daten eine Diagnostik hinsichtlich des Vorhandenseins eines für die Klimaanlage nicht zugelassenen oder potentiell schädlichen Kühlmittels vorgenommen wird, wobei in Abhängigkeit von dieser Diagnostik ein Warnsignal für den Fahrer erzeugt und/oder eine automatische Unterbrechung des Betriebs der Klimaanlage herbeigeführt wird.

Gemäß einer Ausführungsform erfolgt die Ermittlung der wenigstens einen für den Typ des im Kühlmittelkreislauf vorhandenen Kühlmittels charakteristischen Größe unmittelbar innerhalb des Kühlmittelkreislaufs.

Gemäß einer Ausführungsform werden zur Ermittlung der charakteristischen Gröβe des Kühlmittels die sich bei einer Mehrzahl unterschiedlicher Temperaturen jeweils einstellenden Werte des Dampfdrucks des Kühlmittels bestimmt. Hierdurch wird dem Umstand Rechnung getragen, dass je nach Temperaturbereich die Unterschiede zwischen den Dampfdruckkurven unterschiedlicher in Betracht kommender Kühlmittel verhältnismäßig gering sein können, so dass mittels einer Wiederholung der Messung bei einer Mehrzahl unterschiedlicher Temperaturen eine erhöhte Zuverlässigkeit der Diagnose erzielt werden kann.

Weitere Ausgestaltungen der Erfindung sind der Beschreibung sowie den Unteransprüchen zu entnehmen.

Die Erfindung wird nachstehend anhand bevorzugter Ausgestaltungen und unter Bezugnahme auf die beigefügte Abbildung näher erläutert.

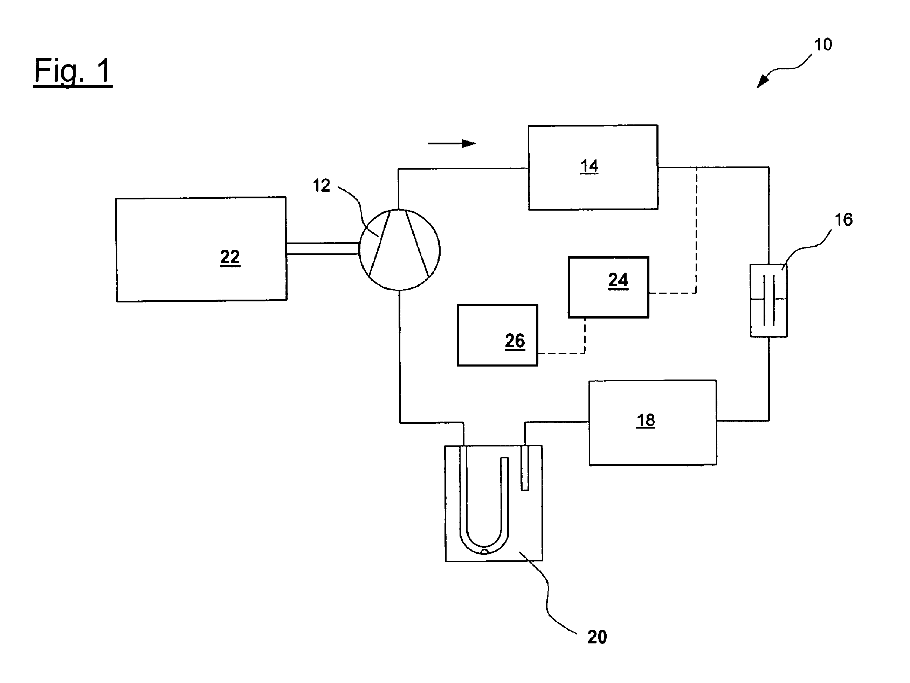

Die einzige Figur 1 zeigt eine schematische Darstellung zur Erläuterung des Aufbaus und der Funktionsweise einer Klimaanlage gemäß einer Ausführungsform der Erfindung.

Gemäß Fig. 1 weist eine Klimaanlage 10 für ein Kraftfahrzeug einen Kühlmittelkreislauf mit einem über einen Elektromotor 22 betriebenen Kompressor 12 zum Komprimieren des Kühlmittels, einem Kondensator 14 zum Abkühlen und Kondensieren des komprimierten Kühlmittels, einer im Ausführungsbeispiel als Drosselkapillare ausgestalteten Expansionseinrichtung 16 zur Druckreduzierung des Kühlmittels, einem Verdampfer 18 zum Verdampfen des Kühlmittels und einem Akkumulator 20 auf.

Die Klimaanlage 10 weist weiter einen Sensor 24 zur Bestimmung des Dampfdruckes für eine Mehrzahl unterschiedlicher Temperaturen auf, d.h. es wird eine Mehrzahl von Punkten auf der Dampfdruckkurve des Kühlmittels bestimmt. Außerdem ist in dem gezeigten Ausführungsbeispiel eine Warneinrichtung 26 vorgesehen, welche für den Fall, dass die durch den Sensor 24 ermittelten Werte auf das Vorhandensein eines nicht ausdrücklich vom Fahrzeughersteller empfohlenen bzw. freigegebenen Kühlmittels in dem Kühlmittelkreislauf hindeuten, ein (z.B. akustisches oder visuelles) Warnsignal ausgeben. Gemäß einer weiteren Ausführungsform kann für diesen Fall - alternativ oder zusätzlich zur Erzeugung eines Warnsignals - auch der Betrieb der Klimaanlage 10 automatisch unterbrochen werden, wozu eine geeignete, auf den Sensor 24 ansprechende Steuereinrichtung vorgesehen sein kann.

Zusammenfassend wird durch Verwendung des Sensors 24 zur Bestimmung des Dampfdruckes sowie der Warneinrichtung 26 in der Klimaanlage 10 zum einen eine Diagnostik hinsichtlich potentiell schädlicher Kühlmittel ermöglicht und zum anderen erforderlichenfalls eine rechtzeitige Warnung für den Fahrer des Fahrzeuges sichergestellt. Des Weiteren kann durch eine auf den Sensor 24 ansprechende Steuereinrichtung im Falle des Nachweises eines potentiell schädlichen und/oder nicht zugelassenen Kühlmittels auch der Betrieb der Klimaanlage automatisch unterbrochen werden.

Im Ergebnis wird gemäß der Erfindung die Gefahr eines Betriebs mit ungeeigneten und/oder schädlichen Kühlmitteln vermieden oder zumindest wesentlich reduziert.

## Patentansprüche

1. Klimaanlage (10) für ein Kraftfahrzeug, wobei die Klimaanlage einen Kühlmittelkreislauf und eine Einrichtung zur Ermittlung wenigstens einer für den Typ eines im Kühlmittelkreislauf vorhandenen Kühlmittels charakteristischen Größe aufweist,
**dadurch gekennzeichnet, dass**
die Klimaanlage (10) dahingehend ausgelegt ist, basierend auf einem Vergleich der wenigstens einen charakteristischen Größe mit gespeicherten Daten eine Diagnostik hinsichtlich des Vorhandenseins eines für die Klimaanlage nicht zugelassenen oder potentiell schädlichen Kühlmittels vorzunehmen, wobei in Abhängigkeit von dieser Diagnostik ein Warnsignal für den Fahrer erzeugbar und/oder eine automatische Unterbrechung des Betriebs der Klimaanlage (10) herbeiführbar ist.

2. Klimaanlage nach Anspruch 1,
**dadurch gekennzeichnet, dass**
die Einrichtung zur Ermittlung wenigstens einer für den Typ des im Kühlmittelkreislauf vorhandenen Kühlmittels charakteristischen Größe wenigstens einen Sensor (24) zur Ermittlung des Dampfdrucks des Kühlmittels innerhalb des Kühlmittelkreislaufs aufweist.

3. Klimaanlage nach Anspruch 1 oder 2,
**dadurch gekennzeichnet, dass**
die Einrichtung zur Ermittlung wenigstens einer für den Typ des im Kühlmittelkreislauf vorhandenen Kühlmittels charakteristischen Größe dahingehend ausgelegt ist, eine die Identifizierung des in dem Kühlmittelkreislauf vorhandenen Kühlmittels ermöglichende Kennlinie zu messen.

4. Klimaanlage nach Anspruch 3,
**dadurch gekennzeichnet, dass**
diese Kennlinie die Dampfdruckkurve des Kühlmittels ist.

5. Verfahren zum Betreiben einer Klimaanlage (10), insbesondere einer nach einem der Ansprüche 1 bis 4 ausgestalteten Klimaanlage, wobei wenigstens eine für den Typ eines im Kühlmittelkreislauf vorhandenen Kühlmittels charakteristische Größe ermittelt wird,
**dadurch gekennzeichnet, dass**
basierend auf einem Vergleich der wenigstens einen charakteristischen Größe mit gespeicherten Daten eine Diagnostik hinsichtlich des Vorhandenseins eines für die Klimaanlage nicht zugelassenen oder potentiell schädlichen Kühlmittels vorgenommen wird, wobei in Abhängigkeit von dieser Diagnostik ein Warnsignal für den Fahrer erzeugt und/oder eine automatische Unterbrechung des Betriebs der Klimaanlage (10) herbeigeführt wird.

6. Verfahren nach Anspruch 5,
**dadurch gekennzeichnet, dass**
die Ermittlung der wenigstens einen für den Typ des im Kühlmittelkreislauf vorhandenen Kühlmittels charakteristischen Größe unmittelbar innerhalb des Kühlmittelkreislaufs erfolgt.

7. Verfahren nach Anspruch 5 oder 6,
**dadurch gekennzeichnet, dass**
zur Ermittlung der charakteristischen Größe des Kühlmittels die sich bei einer Mehrzahl unterschiedlicher Temperaturen jeweils einstellenden Werte des Dampfdrucks des Kühlmittels bestimmt werden.

## Claims

1. Air-conditioning system (10) for a motor vehicle, the air-conditioning system having a coolant circuit and a device for determining at least one quantity characteristic of the type of coolant present in the coolant circuit, **characterized in that** the air-conditioning system (10) is designed to carry out, based on a comparison of the at least one characteristic quantity with stored data, a diagnosis regarding the presence of a coolant not permitted for or potentially harmful to the air-conditioning system, a warning signal for the driver being generatable and/or an automatic interruption in the operation of the air-conditioning system (10) being implementable as a function of this diagnosis.

2. Air-conditioning system according to Claim 1, **characterized in that** the device for determining at least one quantity characteristic of the type of coolant present in the coolant circuit has at least one sensor (24) for determining the vapour pressure of the coolant inside the coolant circuit.

3. Air-conditioning system according to Claim 1 or 2, **characterized in that** the device for determining at least one quantity characteristic of the type of coolant present in the coolant circuit is designed to measure a characteristic curve making it possible to identify the coolant present in the coolant circuit.

4. Air-conditioning system according to Claim 3, **characterized in that** this characteristic curve is the vapour pressure curve of the coolant.

5. Method for operating an air-conditioning system (10), in particular an air-conditioning system configured according to one of Claims 1 to 4, at least one quantity characteristic of the type of coolant present in the coolant circuit being determined, **characterized in that**, based on a comparison of the at least one characteristic quantity with stored data, a diagnosis is carried out with regard to the presence of a coolant not permitted for or potentially harmful to the air-conditioning system, a warning signal for the driver being generated and/or an automatic interruption in the operation of the air-conditioning system (10) being implemented as a function of this diagnosis.

6. Method according to Claim 5, **characterized in that** the at least one quantity characteristic of the type of coolant present in the coolant circuit is determined directly inside the coolant circuit.

7. Method according to Claim 5 or 6, **characterized in that**, to determine the characteristic quantity of the coolant, the values of the vapour pressure of the coolant which are established in each case at a plurality of different temperatures are determined.

## Revendications

1. Installation de climatisation (10) pour un véhicule automobile, l'installation de climatisation comportant un circuit de moyen de refroidissement et un dispositif servant à déterminer au moins une grandeur caractéristique du type de moyen de refroidissement présent dans le circuit de moyen de refroidissement,
**caractérisée en ce que**
l'installation de climatisation (10) est conçue, sur la base d'une comparaison de l'au moins une grandeur caractéristique avec les données mémorisées, pour réaliser un diagnostic établissant la présence d'un moyen de refroidissement non autorisé ou potentiellement nocif pour l'installation de climatisation, un signal d'avertissement pouvant être envoyé au conducteur et/ou une interruption de fonctionnement automatique de l'installation de climatisation (10) pouvant être déclenchée en fonction du diagnostic établi.

2. Installation de climatisation selon la revendication 1,
**caractérisée en ce que**
le dispositif servant à déterminer au moins une grandeur caractéristique du type de moyen de refroidissement présent dans le circuit de moyen de refroidissement comporte au moins un capteur (24) servant à déterminer la pression de la vapeur du moyen de refroidissement à l'intérieur du circuit de moyen de refroidissement.

3. Installation de climatisation selon la revendication 1 ou 2,
**caractérisée en ce que**
le dispositif servant à déterminer au moins une grandeur caractéristique du type de moyen de refroidissement présent dans le circuit de moyen de refroidissement est conçu pour mesurer la courbe caractéristique permettant l'identification du moyen de refroidissement présent dans le circuit de moyen de refroidissement.

4. Installation de climatisation selon la revendication 3,
**caractérisée en ce que**
ladite courbe caractéristique est la courbe de pression de la vapeur du moyen de refroidissement.

5. Procédé d'exploitation d'une installation de climatisation (10), notamment d'une installation de climatisation configurée selon l'une quelconque des revendications 1 à 4, au moins une grandeur caractéristique du type de moyen de refroidissement présent dans le circuit de moyen de refroidissement étant déterminée,
**caractérisé en ce que**,
sur la base d'une comparaison de l'au moins une grandeur caractéristique avec les données mémorisées, un diagnostic est réalisé en fonction de la présence établie d'un moyen de refroidissement non autorisé ou potentiellement nocif pour l'installation de climatisation, un signal d'avertissement étant envoyé au conducteur et/ou une interruption de fonctionnement automatique de l'installation de climatisation (10) pouvant être déclenchée sur la base de ce diagnostic.

6. Procédé selon la revendication 5,
**caractérisé en ce que**
la détermination de l'au moins une grandeur caractéristique du type de moyen de refroidissement présent dans le circuit de moyen de refroidissement est réalisée directement à l'intérieur du circuit de moyen de refroidissement.

7. Procédé selon la revendication 5 ou 6,
**caractérisé en ce que**
pour déterminer la grandeur caractéristique du moyen de refroidissement, on définit des valeurs de pression de vapeur du moyen de refroidissement s'ajustant respectivement en présence d'une pluralité de températures différentes.
